# EUROPEAN PATENT APPLICATION

(11) **EP 4 456 243 A1**
(43) Date of publication of application: **30.10.2024**
(21) Application number: 22909332.3
(22) Date of filing: 22.08.2022
(51) Int. Cl.: H01M 10/0567, H01M 10/0525, H01M 10/058

(54) **NONAQUEOUS ELECTROLYTE AND LITHIUM ION BATTERY CONTAINING SAME**

(30) Priority: 20.12.2021 CN 202111561440
(71) Applicant: Zhangjiagang Guotai-Huarong New Chemical Materials Co., Ltd, Suzhou, Jiangsu 215600 (CN)
(72) Inventor: QIN, Hu, Suzhou, Jiangsu 215600 (CN); SHI, Erbo, Suzhou, Jiangsu 215600 (CN); CHEN, Xiaoqin, Suzhou, Jiangsu 215600 (CN); GAN, Chaolun, Suzhou, Jiangsu 215600 (CN)
(74) Representative: Fidal Innovation
(86) International application number: PCT/CN2022/113913
(87) International publication number: WO 2023/116005

(57) **Abstract**

The present invention relates to a nonaqueous electrolyte and a lithium ion battery containing same. In order to solve the problem that existing high-voltage lithium batteries cannot have comprehensive performance such as high energy density, high-temperature cycle and storage performance, normal-temperature cycle performance, and rate charging/discharging performance at the same time, the present invention provides a nonaqueous electrolyte, containing substances as shown in the formulas, wherein G1 and G2 are independently selected as a bond, oxygen, sulfur, nitrogen, silicon or phosphorus, at least one of G1 and G2 is oxygen, R1 is an alkylene group, a halogenated alkylene group, or a silyl alkylene group, R2 is an alkyl group, a fluoroalkyl group, an alkenyl group, a fluoroalkenyl group, an alkynyl group, a fluoroalkynyl group or a cyano group, R3 is hydrogen, a halogen, an alkyl group, a haloalkyl group, a cyano group, a siloxane group, an alkoxy group or a haloalkoxy group, X, Y, and Z are independently selected as carbon, oxygen, sulfur, nitrogen or phosphorus, at least one of X, Y, and Z is oxygen, sulfur, nitrogen or phosphorus, and n is an integer between 2 and 6. The cycle performance, the high-temperature performance, and the rate performance of the lithium battery can be improved at the same time.

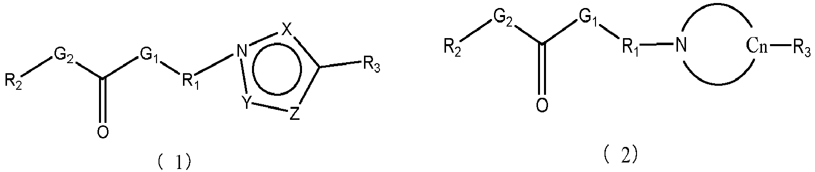

## Description

### Technical Field of the Invention

The present disclosure belongs to the field of lithium battery technology, and particularly, relates to a non-aqueous electrolyte solution and a lithium-ion battery containing the same.

### Background of the Invention

With the emergence of emerging consumption fields such as mobile phones, tablet computers, smart wearables, and ETC, and with the increasing power consumption of power modules, conventional lithium-ion batteries are no longer able to meet the user's usage needs. In order to improve the market development and satisfy customer needs, the industry is currently mainly developing from three aspects. One is to seek new material systems, such as cathode materials such as lithium cobaltate, lithium-rich manganese-based cathode materials, ternary high nickel-rich cathode materials, and anode materials such as silicon carbon; the second is to increase the charge cutoff voltage of existing materials, such as high-voltage lithium cobalt oxide cathode material of 4.4 V, 4.45 V, and 4.6 V; the third is to change the battery process, increase the surface density and compaction density, or use thinner fluid collectors, tape, aluminum plastic shells, and etc..

In recent years, with the rapid improvement of battery technology, the vast market has provided more development opportunities but also brought greater challenges. It has put forward higher requirements for the adaptability of battery usage environments, requiring batteries to maintain good performance in different harsh environments. Therefore, expanding the temperature range of battery usage has become an important topic in battery development. In order to solve this problem, people need to make greater progress in battery materials. Electrolyte solution, as the blood of a battery, has a significant impact on the high and low temperature performance of the battery. According to literature, adding film forming additives to the battery electrolyte solution is usually used to improve the cycling performance of the battery. For example, patent CN201610218844.2, patent CN201610518477.8 and patent CN201210098386.5 use the composition of three main additives, namely fluoroethylene carbonate, nitrile compounds and other additives, to improve the high-temperature storage performance of lithium cobalt oxide battery. However, patent CN200580017212. X found that adding nitrile compounds to the electrolyte solution can lead to the problem of battery swelling and significant reduction in recovery capacity under high-temperature storage conditions.

Therefore, in order to promote the development of high-voltage lithium batteries, it is necessary to develop more non-aqueous electrolyte solutions that can simultaneously take into account the cycling and rate performance and high-temperature performance of batteries.

### Summary of the Invention

A purpose of the present disclosure is to provide a non-aqueous electrolyte solution having a good balance of comprehensive performance in terms of cycling performance, high-temperature performance, and rate performance.

Another purpose of the present disclosure to provide a lithium-ion battery containing the above-mentioned non-aqueous electrolyte solution.

In order to realize the above objects, a technical solution adopted in the present disclosure is as follows:
A first aspect of the present disclosure provides a non-aqueous electrolyte solution comprising an organic solvent, an electrolyte salt, and an additive, the additive comprises a first additive selected from the group consisting of substances represented by general formula (1), substances represented by general formula (2) and combinations thereof, 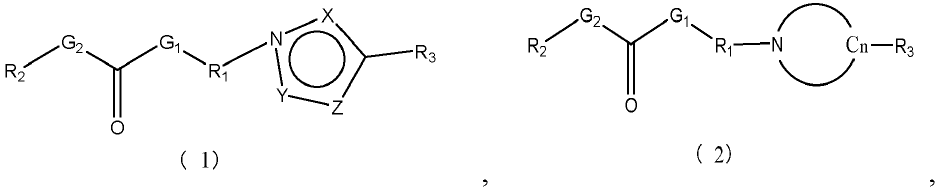
wherein, G₁ and G₂ are independently selected from the group consisting of bonds, oxygen, sulfur, nitrogen, silicon, and phosphorus, and at least one of G₁ and G₂ is oxygen,
R₁ is selected from the group consisting of alkylene, haloalkylene, and silicoalkylene (-Si(CH₃)₂CH₂-),
R₂ is selected from the group consisting of alkyl, fluoroalkyl, alkenyl, fluoroalkenyl, alkynyl, fluoroalkynyl and cyano,
R₃ is selected from the group consisting of hydrogen, halogen, alkyl, haloalkyl, cyano, siloxanyl ((CH₃)₃Si-O-), alkoxy, and haloalkoxy,
**X, Y,** and **Z** are independently selected from the group consisting of carbon, oxygen, sulfur, nitrogen, and phosphorus, and at least one of them is selected from the group consisting of oxygen, sulfur, nitrogen, and phosphorus,
**n** is an integer between 2 and 6.

Generally, the "bond" in the present disclosure refers to a chemical bond, for example, when G₁ is a bond, R₁ can be connected to the carbon atom on the carbonyl group through this chemical bond, or when G₂ is a bond, R₂ can be connected to the carbon atom on the carbonyl group through this chemical bond.

Preferably, one of G₁ and G₂ is oxygen and the other one is a bond.

Preferably, R₁ is selected from the group consisting of C₁ - C₅ alkylene and C₁ - C₅ haloalkylene.

More preferably, R₁ is selected from the group consisting of C₁ - C₄ alkylene and C₁ - C₄ haloalkylene.

Further more preferably, R₁ is selected from the group consisting of C₁ - C₃ alkylene and C₁ - C₃ haloalkylene.

Further preferably, R₁ does not contain branched chains.

Preferably, R₂ is selected from the group consisting of C₁ - C₅ alkyl, C₁ - C₅ fluoroalkyl, C₁ - C₅ alkenyl, and C₁ - C₅ fluoroalkenyl.

More preferably, R₂ is selected from the group consisting of C₁ - C₄ alkyl, C₁ - C₄ fluoroalkyl, C₁ - C₄ alkenyl, and C₁ - C₄ fluoroalkenyl.

Further more preferably, R₂ is selected from the group consisting of C₁ - C₃ alkyl, C₁ - C₃ fluoroalkyl, C₁ - C₃ alkenyl, and C₁ - C₃ fluoroalkenyl.

Preferably, R₃ is selected from the group consisting of hydrogen, and C₁ - C₅ alkyl.

For example, R₃ is hydrogen, methyl, ethyl, or propyl.

More preferably, R₃ is selected from the group consisting of hydrogen, and C₁ - C₅ linear alkyl.

Further more preferably, R₃ is selected from the group consisting of hydrogen, and unsubstituted C₁ - C₅ linear alkyl.

Preferably, any one of **X, Y,** and **Z** is nitrogen, and the rest of them are carbon.

Preferably, **n** is 3, 4 or 5.

Preferably, the first additive is selected from the group consisting of ethyl 1H-imidazole-1-acetate, ethyl 2-(3-methylpyrazol-1-yl)acetate, ethyl piperidin-1-yl acetate, ethyl 2-(1H-imidazol-1-yl)methacrylate, and combinations thereof.

Preferably, the feeding mass of the first additive is 0.01 - 5 % of the total mass of the non-aqueous electrolyte solution.

Further preferably, the feeding mass of the first additive is 0.1 - 5 % of the total mass of the non-aqueous electrolyte solution.

More preferably, the feeding mass of the first additive is 0.1 - 2% of the total mass of the non-aqueous electrolyte solution.

Even further preferably, the feeding mass of the first additive is 0.1 - 1% of the total mass of the non-aqueous electrolyte solution.

Preferably, the additive further comprises a second additive, and the second additive is one or more of cyclic carbonates with unsaturated carbon-carbon bonds, cyclic carbonates with fluorine atoms, cyclic sulfonate compounds, and compounds with cyano groups, and combinations thereof.

Further preferably, the cyclic carbonates with unsaturated carbon-carbon bonds include, but are not limited to, one or more of vinylene carbonate, 4-methyl-1,3-dioxol-2-one, 4,5-dimethyl-1,3-dioxol-2-one, phenyl vinylene carbonate, 4,5-diphenyl vinylene carbonate, 4-ethenyl-1,3-dioxol-2-one, 4,5-diethenyl-1,3-dioxol-2-one, 4-(2-propen-1-yl)-1,3-dioxol-2-one, 4,5-di (2-propen-1-yl)-1,3-dioxol-2-one, 4-fluoro-1,3-dioxol-2-one, 4-fluoro-5-methyl-1,3-dioxol-2-one, 4-fluoro-5-phenyl-1,3-dioxol-2-one, 4-fluoro-5-vinyl-1,3-dioxol-2-one, 4-allyl-5-fluoro-1,3-dioxol-2-one; vinylethylene carbonate, 4,5-divinylethylene carbonate, 4-methyl-5-vinyl-1,3-dioxolane-2-one, 4-allyl-5-vinyl-1,3-dioxolane-2-one, ethynylethylene carbonate, 4,5-diethynylethylene carbonate, 4-methyl-5-ethynyl-1,3-dioxolane-2-one, 4-vinyl-5-ethynyl-1,3-dioxolane-2-one, phenylethylene carbonate, 4,5-diphenylethylene carbonate, 4-phenyl-5-vinyl-1,3-dioxolane-2-one, 4-allyl-5-phenyl-1,3-dioxolane-2-one, 4-(2-propen-1-yl)-1,3-dioxolan-2-one, 4,5-di(2-propen-1-yl)-1,3-dioxolan-2-one, 4-methyl-5-allyl-1,3-dioxolan-2-one, etc..

Further preferably, the cyclic carbonates with unsaturated carbon-carbon bonds are selected from the group consisting of vinylene carbonate, vinylethylene carbonate, phenyl vinylene carbonate, and combinations thereof.

Further preferably, the cyclic carbonates with fluorine atoms include, but are not limited to, monofluoroethylene carbonate, 4,4-difluoroethylene carbonate, 4,5-difluoroethylene carbonate, 4-fluoro-4-methyl-1,3-dioxolan-2-one, 4,5-difluoro-4-methyl-1,3-dioxolan-2-one, 4-fluoro-5-methyl-1,3-dioxolan-2-one, 4,4-difluoro-5-methyl-1,3-dioxolan-2-one, 4-(fluoromethyl) -1,3-dioxolan-2-one, 4-(difluoromethyl)-1,3-dioxolan-2-one, 4-(trifluoromethyl) -1,3-dioxolan-2-one, 4-(fluoromethyl)-4-fluoro-1,3-dioxolan-2-one, 4-(fluoromethyl)-5-fluoro-1,3-dioxolan-2-one, 4-fluoro-4,5-dimethyl-1,3-dioxolan-2-one, 4,5-difluoro-4,5-dimethyl-1,3-dioxolan-2-one, 4,4-difluoro-5,5-dimethyl-1,3-dioxolan-2-one, etc..

Further preferably, the cyclic carbonate with a fluorine atom is fluoroethylene carbonate and/or 4,5-difluoroethylene carbonate.

Further preferably, the cyclic sulfonate compounds include, but are not limited to, one or more of 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propenyl-1,3-sultone, 2-propenyl-1,3- sultone, 1-fluoro-1-propenyl-1,3-sultone, 2-fluoro-1-propenyl-1,3-sultone, 3-fluoro- 1-propenyl-1,3-sultone, 1-fluoro-2-propenyl-1,3-sultone, 2-fluoro-2-propenyl-1,3- sultone, 3-fluoro-2-propenyl-1,3-sultone, 1-methyl-1-propenyl-1,3-sultone, 2-methyl-1-propenyl-1,3-sultone, 3-methyl-1-propenyl-1,3-sultone, 1-methyl-2-propenyl-1,3-sultone, 2-methyl-2-propenyl-1,3-sultone, 3-methyl-2-propenyl-1,3-sultone, 1,4-butyl sultone, 1-fluoro-1,4-butyl sultone, 2-fluoro-1,4-butyl sultone, 3-fluoro-1,4-butyl sultone, 4-fluoro-1,4-butyl sultone, 1-methyl-1,4-butyl sultone, 2-methyl-1,4-butyl sultone, 3-methyl-1,4-butyl sultone, 4-methyl-1,4-butyl sultone, 5,6-dihydrooxathiine 2,2-dioxide, 3,6-dihydrooxathiine 2,2-dioxide, 3,4-dihydrooxathiine 2,2-dioxide, 3-fluoro-5,6-dihydrooxathiine 2,2-dioxide, 4-fluoro-5,6-dihydrooxathiine 2,2-dioxide, 5-fluoro-5,6-dihydrooxathiine 2,2-dioxide, 6-fluoro-5,6-dihydrooxathiine 2,2-dioxide, 3-fluoro-3,6-dihydrooxathiine 2,2-dioxide, 4-fluoro-3,6-dihydrooxathiine, 5-fluoro-3,6-dihydrooxathiine 2,2-dioxide, 6-fluoro-3,6-dihydrooxathiine 2,2-dioxide, 3-fluoro-3,4-dihydrooxathiine 2,2-dioxide, 4-fluoro-3,4-dihydrooxathiine 2,2-dioxide, 5-fluoro-3,4-dihydrooxathiine 2,2-dioxide, 6-fluoro-3,4-dihydrooxathiine 2,2-dioxide, 3-methyl-5,6-dihydrooxathiine 2,2-dioxide, 4-methyl-5,6-dihydrooxathiine 2,2-dioxide, 5-methyl-5,6-dihydrooxathiine 2,2-dioxide, 6-methyl-5,6-dihydrooxathiine 2,2-dioxide, 3-methyl-3,6-dihydrooxathiine 2,2-dioxide, 4-methyl-3,6-dihydrooxathiine 2,2-dioxide, 5-methyl-3,6-dihydrooxathiine 2,2-dioxide, 6-methyl-3,6-dihydrooxathiine 2,2-dioxide, 3-methyl-3,4-dihydrooxathiine 2,2-dioxide, 4-methyl-3,4-dihydrooxathiine 2,2-dioxide, 5-methyl-3,4-dihydrooxathiine 2,2-dioxide, 6-methyl-3,4-dihydrooxathiine 2,2-dioxide, 1,5-pentane sultone, 3-fluorooxathiepane 2,2-dioxide, 4-fluorooxathiepane 2,2-dioxide, 5-fluorooxathiepane 2,2-dioxide, 6-fluorooxathiepane 2,2-dioxide, 7-fluorooxathiepane 2,2-dioxide, 3-methyloxathiepane 2,2-dioxide, 4-methyloxathiepane 2,2-dioxide, 5-methyloxathiepane 2,2-dioxide, 6-methyloxathiepane 2,2-dioxide, 7-methyloxathiepane 2,2-dioxide, 6,7-dihydro-5H-oxathiepine 2,2-dioxide, 6,7-dihydro-3H-oxathiepine 2,2-dioxide, 4,7-dihydro-3H-oxathiepine 2,2-dioxide, 4,5-dihydro-3H-oxathiepine 2,2-dioxide, 3-fluoro-6,7-dihydro-5H-oxathiepine 2,2-dioxide, 4-fluoro-6,7-dihydro-5H-oxathiepine 2,2-dioxide, 5-fluoro-6,7-dihydro-5H-oxathiepine 2,2-dioxide, 6-fluoro-6,7-dihydro-5H-oxathiepine 2,2-dioxide, 7-fluoro-6,7-dihydro-5H-oxathiepine 2,2-dioxide, 3-fluoro-6,7-dihydro-3H-oxathiepine 2,2-dioxide, 4-fluoro-6,7-dihydro-3H-oxathiepine 2,2-dioxide, 5-fluoro-6,7-dihydro-3H-oxathiepine 2,2-dioxide, 6-fluoro-6,7-dihydro-3H-oxathiepine 2,2-dioxide, 7-fluoro-6,7-dihydro-3H-oxathiepine 2,2-dioxide, 3-fluoro-4,7-dihydro-3H-oxathiepine 2,2-dioxide, 4-fluoro-4,7-dihydro-3H-oxathiepine 2,2-dioxide, 5-fluoro-4,7-dihydro-3H-oxathiepine 2,2-dioxide, 6-fluoro-4,7-dihydro-3H-oxathiepine 2,2-dioxide, 7-fluoro-4,7-dihydro-3H-oxathiepine 2,2-dioxide, 3-fluoro-4,5-dihydro-3H-oxathiepine 2,2-dioxide, 4-fluoro-4,5-dihydro-3H-oxathiepine 2,2-dioxide, 5-fluoro-4,5-dihydro-3H-oxathiepine 2,2-dioxide, 6-fluoro-4,5-dihydro-3H-oxathiepine 2,2-dioxide, 7-fluoro-4,5-dihydro-3H-oxathiepine 2,2-dioxide, 3-methyl-6,7-dihydro-SH-oxathiepine 2,2-dioxide, 4-methyl-6,7-dihydro-5H-oxathiepine 2,2-dioxide, 5-methyl-6,7-dihydro-5H-oxathiepine 2,2-dioxide, 6-methyl-6,7-dihydro-5H-oxathiepine 2,2-dioxide, 7-methyl-6,7-dihydro-SH-oxathiepine 2,2-dioxide, 3-methyl-6,7-dihydro-3H-oxathiepine 2,2-dioxide, 4-methyl-6,7-dihydro-3H-oxathiepine 2,2-dioxide, 5-methyl-6,7-dihydro-3H-oxathiepine 2,2-dioxide, 6-methyl-6,7-dihydro-3H-oxathiepine 2,2-dioxide, 7-methyl-6,7-dihydro-3H-oxathiepine 2,2-dioxide, 3-methyl-4,7-dihydro-3H-oxathiepine 2,2-dioxide, 4-methyl-4,7-dihydro-3H-oxathiepine 2,2-dioxide, 5-methyl-4,7-dihydro-3H-oxathiepine 2,2-dioxide, 6-methyl-4,7-dihydro-3H-oxathiepine 2,2-dioxide, 7-methyl-4,7-dihydro-3H-oxathiepine 2,2-dioxide, 3-methyl-4,5-dihydro-3H-oxathiepine 2,2-dioxide, 4-methyl-4,5-dihydro-3H-oxathiepine 2,2-dioxide, 5-methyl-4,5-dihydro-3H-oxathiepine 2,2-dioxide, 6-methyl-4,5-dihydro-3H-oxathiepine 2,2-dioxide, 7-methyl-4,5-dihydro-3H-oxathiepine 2,2-dioxide; 1-propene 1,3-sultone, 2-sulfobenzoic anhydride, propylene sulfate, propylene sulfite, butylene sulfite, vinyl ethylene sulfite, oxathiirane 2,2-dioxide, oxathietane 2,2-dioxide, oxathiolane 2,2-dioxide, methylene methanedisulfonate, and ethylene methanedisulfonate, etc..

Further preferably, the cyclic sulfonate compounds are selected from the group consisting of 1,3-propane sultone, 1-fluoro-1,3-propane sultone, methylene methanedisulfonate, and combinations thereof.

Further preferably, the compounds with cyano groups include, but are not limited to, one or more of acetonitrile, propionitrile, butyronitrile, isobutyronitrile, valeronitrile, isovaleronitrile, lauronitrile, 2-methylbutyronitrile, trimethylacetonitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, 1,2,3-propanetricarbonitrile, 1,3,5-pentanetricarbonitrile, pentafluoropropionitrile; malononitrile, succinonitrile, glutaronitrile, adiponitrile, heptanedinitrile, octanedinitrile, azelanitrile, sebaconitrile, undecanedicarbonitrile, dodecanedicarbonitrile, methyl malononitrile, ethyl malononitrile, isopropyl malononitrile, tert-butyl malononitrile, methyl succinonitrile, 2,2-dimethyl succinonitrile, 2,3-dimethyl succinonitrile, 2,3,3-trimethyl succinonitrile, 2,2,3,3-tetramethyl succinonitrile, 2,3-diethyl-2,3-dimethyl succinonitrile, 2,2-diethyl-3,3-dimethyl succinonitrile, bicyclohexyl-1,1-dicarbonitrile, bicyclohexyl-2,2-dicarbonitrile, bicyclohexyl-3,3-dicarbonitrile, 2,5 -dimethyl-2,5-hexanedicarbonitrile, 2,3-diisobutyl-2,3 -dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, maleonitrile, fumaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, 3,3'-(ethylenedithio)dipropionitrile; cyclohexanetricarbonitrile, 2-aminoethane-1,1,1 -tricarbonitrile, 2-propoxy-1,1,1-ethanetricarbonitrile, ethene-1,1,2-tricarbonitrile, pentanetricarbonitrile, propanetricarbonitrile, and heptane-1,1,1 -tricarbonitrile.

Further preferably, the compounds with cyano groups are succinonitrile and/or adiponitrile.

According to some specific and preferred embodiments, the second additive is selected from the group consisting of vinylene carbonate, succinonitrile, fluoroethylene carbonate, ethylene sulfate, 1,3-propane sultone, 1,4-butyl sultone, ethylene sulfite, 1,3-(1-propenyl)sultone, 2-sulfobenzoic anhydride, methylene methanedisulfonate, vinyl ethylene sulfite, propylene sulfate, propylene sulfite, butylene sulfite, and combinations thereof.

Preferably, the feeding ratio of the first additive to the second additive is 1: (1 - 5).

Preferably, the electrolyte salt is selected from the group consisting of LiBF₄, LiPF₆, LiAsF₆, LiClO₄, LiN(SO₂F)₂, LiN(SO₂CF₃)₂, LiN(SO₂C₂F₅)₂, LiSO₃CF₃, LiC₂O₄BC₂O₄, LiFC₆F₅BC₂O₄, Li₂PO₂F₂, LiBOB, LiODFB, and combinations thereof.

Preferably, the molar concentration of the electrolyte salt is 0.5 - 2 mol/L.

Further preferably, the molar concentration of the electrolyte salt is 0.5 - 1.5 mol/L.

Preferably, the organic solvent is selected from the group consisting of ethylene carbonate, propylene carbonate, dimethyl carbonate, diethyl carbonate, ethyl methyl carbonate, butylene carbonate, γ-butyrolactone, γ-valerolactone, δ-valerolactone, ε-caprolactone, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, and combinations thereof.

The present disclosure further provides a lithium-ion battery comprising a cathode, an anode and a non-aqueous electrolyte solution, the non-aqueous electrolyte solution is the above-mentioned non-aqueous electrolyte solution.

Preferably, the cathode active material is selected from the group consisting of layered transition metal oxides, olivine-form phosphate compounds and spinel-form manganese-contained compounds.

Preferably, the anode active material is graphite.

Preferably, the voltage range of the lithium-ion battery is 4.35 - 4.6 V.

Due to the utilization of the above technical solution, the present disclosure has the following advantages over the prior art:
By using the nitrogen heterocyclic compound represented by general formula (1) and/or general formula (2) as the additive, the electrolyte solution of the present disclosure can comprehensively improve the cycling performance at room temperature, rate performance and high-temperature performance of the high-voltage lithium battery,
Further, by combining with the cyclic carbonate with an unsaturated carbon-carbon bond, the cyclic carbonate with a fluorine atom, the cyclic sulfonate compound, and the compound with a cyano group, its comprehensive performance is further improved.

### Detailed Description of Exemplary Embodiments

The present disclosure is further described below combining with specific embodiments. However, the present disclosure is not limited to these embodiments. The implementation conditions employed by the embodiments may be further adjusted according to particular requirements, and undefined implementation conditions usually are conditions in conventional experiments. The technical features involved in the respective implementations of the present disclosure can be combined with each other if they do not conflict with each other.

In recent years, the requirements for the characteristics of lithium-ion batteries used in 3C digital and other fields have become increasingly high. Lithium-ion batteries need to have all the performance such as high energy density, high-temperature cycling performance, high-temperature storage performance, cycling performance, and rate charging and discharging performance, but have not yet been achieved.

To solve the above technical problems, the inventor of the present disclosure has carried out in-depth research and a large number of experiments, and was able to propose a lithium-ion non-aqueous electrolyte solution and a lithium-ion secondary battery using the non-aqueous electrolyte solution. The non-aqueous electrolyte battery uses a non-aqueous electrolyte solution having a nitrogen heterocyclic compound, a cathode and an anode that can absorb and release metal ions, the anode has an anode active material that contains graphite particles and metal particles that can form alloys with Li, and the voltage range is 4.35 - 4.6 V.

According to the present disclosure, a non-aqueous electrolyte solution comprises an organic solvent, an electrolyte salt, and an additive, the additive comprises a first additive selected from the group consisting of substances represented by general formula (1), substances represented by general formula (2) and combinations thereof, 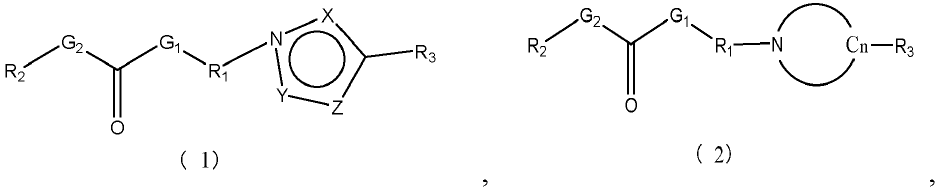
wherein, G₁ and G₂ are independently selected from the group consisting of bonds, oxygen, sulfur, nitrogen, silicon, and phosphorus, and at least one of G₁ and G₂ is oxygen,
R₁ is selected from the group consisting of alkylene, haloalkylene, and silicoalkylene,
R₂ is selected from the group consisting of alkyl, fluoroalkyl, alkenyl, fluoroalkenyl, alkynyl, fluoroalkynyl and cyano,
R₃ is selected from the group consisting of hydrogen, halogen, alkyl, haloalkyl, cyano, siloxanyl, alkoxy, and haloalkoxy,
**X, Y,** and **Z** are independently selected from the group consisting of carbon, oxygen, sulfur, nitrogen, and phosphorus, and at least one of them is selected from the group consisting of oxygen, sulfur, nitrogen, and phosphorus,
**n** is an integer between 2 and 6.

According to the present disclosure, the additive comprises a second additive, and the second additive is selected from the group consisting of cyclic carbonates with unsaturated carbon-carbon bonds, cyclic carbonates with fluorine atoms, cyclic sulfonate compounds, compounds with cyano groups, and combinations thereof.

According to the present disclosure, the feeding mass of the first additive and the feeding mass of the second additive are 0.01 - 5 % of the total mass of the non-aqueous electrolyte solution, respectively.

According to the present disclosure, the feeding ratio of the first additive to the second additive is 1: (1 - 5).

According to the present disclosure, the electrolyte salt is a lithium salt.

According to the present disclosure, the molar concentration of the electrolyte salt is 0.5 - 2 mol/L.

According to the present disclosure, the organic solvent is carbonate compounds.

According to the present disclosure, the anode that can absorb and release metal ions is a layered transition metal oxide, which is LiCoO₂, especially a high-voltage lithium cobalt oxide anode material with a voltage range of 4.35-4.6 V.

By including the nitrogen heterocyclic compound represented by the general formula (1) and/or general formula (2) or further combining with the second additive while containing the electrolyte and the non-aqueous solvent, the non-aqueous electrolyte solution of the present disclosure can improve the cycling performance and rate discharge performance of the non-aqueous electrolyte battery, improve its high-temperature storage performance, and reduce the gas production and avoid battery bulge. Here, the "battery bulge" of the non-aqueous electrolyte battery means that after the initial adjustment of the battery, the thickness of the initial battery is compared with the thickness of the battery after the high-temperature cycling test, and its thickness increases, indicating that "battery bulge" has occurred.

The present disclosure is further described below combining with specific embodiments. However, the present disclosure is not limited to these embodiments. The implementation conditions employed by the embodiments may be further adjusted according to particular requirements, and undefined implementation conditions usually are conditions in conventional experiments. The technical features involved in the respective implementations of the present disclosure can be combined with each other if they do not conflict with each other.

Cathode: 95% by mass of LiCoO₂ as the active material for 4.35 V (or 4.45 V), 3% of acetylene black as the conductive material, and 2% of polyvinylidene fluoride (PVDF) as the bonding material were mixed in N-methyl-2-pyrrolidone solvent using a dispersion mixer to prepare a slurry. This slurry was applied evenly on both sides of aluminum foil and dried, and then pressed to produce the cathode.

Anode: 95% by mass of artificial graphite as the active material, 2% of SP (conductive carbon black) as the conductive material, and 3% of sodium carboxymethyl cellulose (CMC) as the bonding material were mixed using a dispersion mixer to prepare a slurry. This slurry was applied evenly on both sides of copper foil and dried, and then pressed to produce the anode.

Preparation of non-aqueous electrolyte solution:
In an argon filled glovebox (H₂O content < 10 ppm), EC and EMC were mixed well at a volume ratio of 30:70, or DEC, EC and EMC were mixed well at a volume ratio of 20:30:50, or EC, PC, EP and PP were mixed well at a volume ratio of 20:10:30:40, or EC, PC and PP were mixed well at a volume ratio of 20:10:70, and LiPF₆ was added in a final concentration of 1 mol/L to the mixed solution to prepare an electrolyte solution, which was called the reference electrolyte and used as Comparative example 1. See Table 1 and Table 2 for the non-aqueous electrolyte solution formula of other embodiments and comparative examples, where, unless otherwise specified, "wt" refers to the mass percentage.

Preparation of non-aqueous electrolyte battery:
The cathode, the anode, and a polyolefin separator were stacked in the order of cathode-separator-anode. They were packaged by an aluminum film to obtain a cell element which was vacuum sealed after injecting the non-aqueous electrolyte solution to prepare a non-aqueous electrolyte secondary battery.

Evaluation of non-aqueous electrolyte secondary battery:
Battery test at room temperature: the cathode was 4.35 V lithium cobalt oxide, and the assembled battery was first formed under the following formation conditions: at room temperature of 25 °C, charge at a constant current of 0.1 C to 4.35 V, then charge at a constant voltage of 4.35 V for 2 h, let it stand for 10 min, and then discharge at a constant current of 0.2 C to 3.0 V. At room temperature of 25 °C, the battery was charged at a constant current of 1 C to 4.35 V, then charged at a constant voltage of 4.35 V for 2 h, stood for 10 min, and then was discharged at a constant current of 1 C to 3.0 V, and the first cycle discharge capacity was record as **W₁,** and the battery stood for 10 min. The cycling number was set to 300 cycles, and the discharge capacity in the 300th cycle was recorded as **W₃₀₀.** Capacity retention rate in the 300th cycle = **W₃₀₀/W₁***100%.

Battery rate test: the cathode was 4.35 V lithium cobalt oxide, the assembled battery was first formed under the following formation conditions: at room temperature of 25 °C, charge at a constant current of 0.1 C to 4.35 V, then charge at a constant voltage of 4.35 V for 2 h, let it stand for 10 min, and then discharge at a constant current of 0.2 C to 3.0 V, and the discharge capacity was record as **W_{0.2c}.** Then the battery was charged at a constant current of 0.2 C to 4.35 V, then charged at a constant voltage of 4.35 V for 2 h, stood for 10 min, and then was discharged at a constant current of 3.0 C to 3.0 V, and the discharge capacity was record as **W_{3.0C};** the battery was charged at a constant current of 0.2 C to 4.35 V, then charged at a constant voltage of 4.35 V for 2 h, stood for 10 min, and then was discharged at a constant current of 5.0 C to 3.0 V, and the discharge capacity was record as **W_{5.0C}.** 3C rate discharge retention rate = **W_{3.0C}/W_{0.2c}***100%; 5C rate discharge retention rate = **W_{5.0C}W_{0.2c}***100%.

Battery test at high temperature: the cathode was 4.45 V lithium cobalt oxide, and the assembled battery was first formed under the following formation conditions: at room temperature of 25 °C, charge at a constant current of 0.1 C to 4.45 V, then charge at a constant voltage of 4.45 V for 2 h, let it stand for 10 min, and then discharge at a constant current of 0.2 C to 3.0 V. The testing conditions for the cycling performance of lithium-ion batteries at high temperature were as follows: under high temperature conditions of 45 °C, the battery was charged at a constant current of 1 C to 4.45 V, then charged at a constant voltage of 4.45 V for 2 h, stood for 10 min, and then was discharged at a constant current of 1 C to 3.0 V, the discharge capacity was record as **W₁**, and the battery stood for 10 min, the battery thickness was record as **L₁**. The cycling number was set to 300 cycles, and the discharge capacity in the 300th cycle was recorded as **W₃₀₀,** and the battery thickness was record as **L₃₀₀.** Capacity retention rate in the 300th cycle = **W₃₀₀/W₁***100%; Battery bulge rate in the 300th cycle = (L₃₀₀-L₁)/L₁*100%.

**Table 1 Cycling and rate performance of non-aqueous electrolyte lithium batteries (4.35 V) at room temperature**

| | Electrolyte solutions | Additives | Capacity retention rate after 300 cycles at 25 °C (%) | 3 C/0.2 C retention rate (%) | 5 C/0.2 C retention rate (%) |
|---|---|---|---|---|---|
| Embodiment 1 | EC/EMC= 30/70 1M LiPF₆ | 0.5 wt% A1 | 83.30 | 80.10 | 68.90 |
| Embodiment 2 | EC/EMC= 30/70 1M LiPF₆ | 0.5 wt% A2 | 84.10 | 80.30 | 65.90 |
| Embodiment 3 | EC/EMC= 30/70 1M LiPF₆ | 0.5 wt% A3 | 82.30 | 81.30 | 67.70 |
| Embodiment 4 | EC/EMC= 30/70 1M LiPF₆ | 0.5 wt% A4 | 86.30 | 79.60 | 66.20 |
| Embodiment 5 | EC/EMC= 30/70 1M LiPF₆ | 0.5 wt% A1 + 1 wt% PS | 85.20 | 83.10 | 71.20 |
| Embodiment 6 | EC/EMC= 30/70 1M LiPF₆ | 0.5 wt% A2 + 1 wt% PS | 86.30 | 84.50 | 70.00 |
| Embodiment 7 | EC/EMC= 30/70 1M LiPF₆ | 0.5 wt% A3 + 1 wt% PS | 83.20 | 82.60 | 73.20 |
| Embodiment 8 | EC/EMC= 30/70 1M LiPF₆ | 0.5 wt% A4 + 1 wt% PS | 87.20 | 84.50 | 71.00 |
| Embodiment 9 | EC/EMC= 30/70 1M LiPF₆ | 0.5 wt% A1 + 1 wt% SN | 85.50 | 84.70 | 73.20 |
| Embodiment 10 | EC/EMC= 30/70 1M LiPF₆ | 0.5 wt% A2 + 1 wt% SN | 86.70 | 82.30 | 72.30 |
| Embodiment 11 | EC/EMC= 30/70 1M LiPF₆ | 0.5 wt% A3 + 1 wt% SN | 85.10 | 87.30 | 71.80 |
| Embodiment 12 | EC/EMC= 30/70 1M LiPF₆ | 0.5 wt% A4 + 1 wt% SN | 87.70 | 87.60 | 75.40 |
| Embodiment 13 | EC/EMC= 30/70 1M LiPF₆ | 0.5 wt% A1 + 0.5 wt% PS + 1 wt% SN | 86.10 | 86.30 | 85.30 |
| Embodiment 14 | EC/EMC= 30/70 1M LiPF₆ | 0.5 wt% A2 + 0.5 wt% PS + 1 wt% SN | 85.30 | 87.90 | 87.50 |
| Embodiment 15 | EC/EMC= 30/70 1M LiPF₆ | 0.5 wt% A3 + 0.5 wt% PS + 1 wt% SN | 85.10 | 81.40 | 85.20 |
| Embodiment 16 | EC/EMC= 30/70 1M LiPF₆ | 0.5 wt% A4 + 0.5 wt% PS + 1 wt% SN | 88.10 | 89.00 | 83.00 |
| Comparative example 1 | EC/EMC= 30/70 1M LiPF₆ | | 65.30 | 80.30 | 60.50 |
| Comparative example 2 | EC/EMC= 30/70 1M LiPF₆ | 1 wt% VC | 79.50 | 81.20 | 63.70 |
| Comparative example 3 | EC/EMC= 30/70 1M LiPF₆ | 1 wt% PS | 81.30 | 77.20 | 55.70 |
| Comparative example 4 | EC/EMC= 30/70 1M LiPF₆ | 1 wt% FEC | 82.10 | 83.40 | 63.20 |
| Comparative example 5 | EC/EMC= 30/70 1M LiPF₆ | 1 wt% DTD | 80.20 | 82.20 | 65.20 |
| Comparative example 6 | EC/EMC= 30/70 1M LiPF₆ | 1 wt% SN | 83.20 | 83.70 | 64.20 |
| Comparative example 7 | EC/EMC= 30/70 1M LiPF₆ | 0.5 wt% PS + 0.5 wt% VC | 83.50 | 84.60 | 66.70 |
| Comparative example 8 | EC/EMC= 30/70 1M LiPF₆ | 0.5 wt% PS + 1 wt% SN | 84.10 | 84.50 | 65.90 |

**Table 2 Performance of non-aqueous electrolyte lithium batteries (4.45 V) at high temperature**

| | Electrolyte solutions | Additives | Capacity retention rate after 4 h of high-temperature storage at 85 °C (%) | Capacity retention rate after 300 cycles at 45 °C (%) | Battery bulge rate after 300 cycles at 45 °C (%) |
|---|---|---|---|---|---|
| Embodiment 17 | DEC/EC/EMC= 20/30/50 1M LiPF₆ | 0.5 wt% A1 + 1 wt% PS + 2 wt% SN | 91.3 | 97.6 | 4.1 |
| Embodiment 18 | DEC/EC/EMC= 20/30/50 1M LiPF₆ | 0.5 wt% A2 + 1 wt% PS + 2 wt% SN | 90.90 | 95.40 | 3.20 |
| Embodiment 19 | DEC/EC/EMC= 20/30/50 1M LiPF₆ | 0.5 wt% A3 + 1 wt% PS + 2 wt% SN | 85.30 | 95.60 | 3.30 |
| Embodiment 20 | DEC/EC/EMC= 20/30/50 1M LiPF₆ | 0.5 wt% A4 + 1 wt% PS + 2 wt% SN | 88.9 | 94.6 | 2.9 |
| Embodiment 21 | DEC/EC/EMC= 20/30/50 1M LiPF₆ | 0.5 wt% A1 + 0.5 wt% VC + 1 wt% PS + 2 wt% SN | 91.8 | 94.6 | 3.2 |
| Embodiment 22 | DEC/EC/EMC= 20/30/50 1M LiPF₆ | 0.5 wt% A2 + 0.5 wt% VC + 1 wt% PS + 2 wt% SN | 88.70 | 96.20 | 2.90 |
| Embodiment 23 | DEC/EC/EMC= 20/30/50 1M LiPF₆ | 0.5 wt% A3 + 0.5 wt% VC + 1 wt% PS + 2 wt% SN | 90.20 | 92.30 | 5.60 |
| Embodiment 24 | DEC/EC/EMC= 20/30/50 1M LiPF₆ | 0.5 wt% A4 + 0.5 wt% VC + 1 wt% PS + 2 wt% SN | 85.2 | 92.4 | 4.7 |
| Embodiment 25 | EC/PC/EP/PP= 20/10/30/40 1M LiPF₆ | 0.5 wt% A1 + 0.5 wt% VC + 1 wt% PS + 2 wt% SN | 90.1 | 92.3 | 4.9 |
| Embodiment 26 | EC/PC/EP/PP= 20/10/30/40 1M LiPF₆ | 0.5 wt% A2 + 0.5 wt% VC + 1 wt% PS + 2 wt% SN | 93.30 | 95.40 | 3.40 |
| Embodiment 27 | EC/PC/EP/PP= 20/10/30/40 1M LiPF₆ | 0.5 wt% A3 + 0.5 wt% VC + 1 wt% PS + 2 wt% SN | 94.00 | 94.60 | 3.50 |
| Embodiment 28 | EC/PC/EP/PP= 20/10/30/40 1M LiPF₆ | 0.5 wt% A4 + 0.5 wt% VC + 1 wt% PS + 2 wt% SN | 92.40 | 94.70 | 3.20 |
| Embodiment 29 | EC/PC/PP= 20/10/70 1M LiPF₆ | 2 wt% A1 + 0.5 wt% A3 + 3 wt% FEC + 1 wt% PS + 2 wt% SN | 93.50 | 94.50 | 3.30 |
| Embodiment 30 | EC/PC/PP= 20/10/70 1M LiPF₆ | 2 wt% A1 + 1 wt% A2 + 1 wt% A3 + 1 wt% A4 + 3 wt% FEC + 1 wt% PS + 2 wt% SN | 93.80 | 94.70 | 3.40 |
| Comparative example 9 | DEC/EC/EMC= 20/30/50 1M LiPF₆ | 0.5 wt% VC | 75.30 | 75.30 | 10.20 |
| Comparative example 10 | DEC/EC/EMC= 20/30/50 1M LiPF₆ | 1 wt% PS | 79.50 | 75.50 | 8.00 |
| Comparative example 11 | DEC/EC/EMC= 20/30/50 1M LiPF₆ | 1 wt% PS + 2 wt% SN | 73.80 | 77.70 | 6.10 |
| Comparative example 12 | DEC/EC/EMC= 20/30/50 1M LiPF₆ | 0.5 wt% VC + 1 wt% PS + 2 wt% SN | 75.60 | 80.50 | 7.90 |
| Comparative example 13 | EC/PC/EP/PP= 20/10/30/40 1M LiPF₆ | 0.5 wt% VC + 1 wt% PS + 2 wt% SN | 73.50 | 79.30 | 8.20 |
| Comparative example 14 | EC/PC/PP= 20/10/70 1M LiPF₆ | 3 wt% FEC + 0.5 wt% VC + 2 wt% PS | 79.90 | 83.50 | 7.50 |
| Comparative example 15 | EC/PC/PP= 20/10/70 1M LiPF₆ | 3% FEC + 1%PS + 2% SN | 81.2 | 85.3 | 7.1 |

A1: ethyl 1H-imidazole-1-acetate (CAS: 17450-34-9, 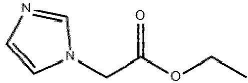 );
A2: ethyl 2-(3-methylpyrazol-1-yl)acetate (CAS: 934172-61-9, 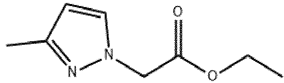 );
A3: ethyl piperidin-1-yl acetate (CAS: 23853-10-3, 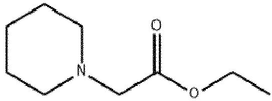 );
A4: ethyl 2-(1H-imidazol-1-yl)methacrylate (CAS:62037-81-4, 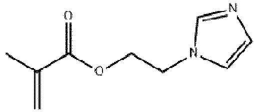 );
DEC: Diethyl carbonate;
EC: Ethylene carbonate;
PC: Propylene carbonate;
EMC: Ethyl methyl carbonate;
EP: Ethyl propionate;
PP: Propyl propionate;
VC: Vinylene carbonate;
PS: 1,3-propane sultone;
FEC: Fluoroethylene Carbonate;
SN: Succinonitrile;
DTD: Ethylene sulfate.

Table 1 shows that using A1, A2, A3, A4 alone or combining A1, A2, A3, or A4 with the second additive (any one or two of VC, PS, FEC, and SN) can improve the cycling and rate performance of the non-aqueous electrolyte lithium batteries (4.35V) at room temperature. Table 2 shows that using A1, A2, A3, or A4 with the second additive (any one or more of VC, PS, FEC, and SN), the performance of the non-aqueous electrolyte lithium batteries (4.45V) at high temperatures was significantly improved.

The embodiments described above are only for illustrating the technical concepts and features of the present disclosure, and are intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

## Claims

1. A non-aqueous electrolyte solution comprising an organic solvent, an electrolyte salt, and an additive, **characterized in that,** the additive comprises a first additive selected from the group consisting of substances represented by general formula (1), substances represented by general formula (2) and combinations thereof, 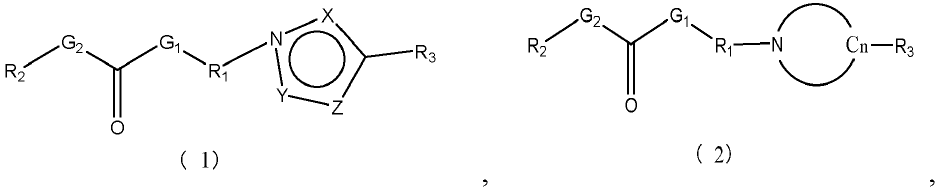
wherein, G₁ and G₂ are independently selected from the group consisting of bonds, oxygen, sulfur, nitrogen, silicon, and phosphorus, and at least one of G₁ and G₂ is oxygen,
R₁ is selected from the group consisting of alkylene, haloalkylene, and silicoalkylene,
R₂ is selected from the group consisting of alkyl, fluoroalkyl, alkenyl, fluoroalkenyl, alkynyl, fluoroalkynyl and cyano,
R₃ is selected from the group consisting of hydrogen, halogen, alkyl, haloalkyl, cyano, siloxanyl, alkoxy, and haloalkoxy,
**X, Y,** and **Z** are independently selected from the group consisting of carbon, oxygen, sulfur, nitrogen, and phosphorus, and at least one of them is selected from the group consisting of oxygen, sulfur, nitrogen, and phosphorus,
**n** is an integer between 2 and 6.

2. The non-aqueous electrolyte solution according to claim 1, **characterized in that,**
one of G₁ and G₂ is oxygen and the other one is a bond.
and/or, R₁ is selected from the group consisting of C₁ - C₅ alkylene and C₁ - C₅ haloalkylene;
and/or, R₂ is selected from the group consisting of C₁ - C₅ alkyl, C₁ - C₅ fluoroalkyl, C₁ - C₅ alkenyl, and C₁ - C₅ fluoroalkenyl;
and/or, R₃ is selected from the group consisting of hydrogen, and C₁ - C₅ alkyl;
and/or, any one of **X, Y,** and **Z** is nitrogen, and the rest of them are carbon;
and/or, **n** is 3, 4 or 5.

3. The non-aqueous electrolyte solution according to claim 2, **characterized in that,**
R₁ is selected from the group consisting of C₁ - C₃ alkylene and C₁ - C₃ haloalkylene; and/or
R₂ is selected from the group consisting of C₁ - C₃ alkyl, C₁ - C₃ fluoroalkyl, C₁ - C₃ alkenyl, and C₁ - C₃ fluoroalkenyl; and/or
R₃ is selected from the group consisting of hydrogen, and C₁ - C₅ linear alkyl.

4. The non-aqueous electrolyte solution according to claim 1, **characterized in that,** the first additive is selected from the group consisting of ethyl 1H-imidazole-1-acetate, ethyl 2-(3-methylpyrazol-1-yl)acetate, ethyl piperidin-1-yl acetate, ethyl 2-(1H-imidazol-1-yl)methacrylate, and combinations thereof.

5. The non-aqueous electrolyte solution according to claim 1, **characterized in that,** the feeding mass of the first additive is 0.01 - 5% of the total mass of the non-aqueous electrolyte solution.

6. The non-aqueous electrolyte solution according to claim 5, **characterized in that,** the feeding mass of the first additive is 0.1 - 5% of the total mass of the non-aqueous electrolyte solution.

7. The non-aqueous electrolyte solution according to claim 1, **characterized in that,** the additive further comprises a second additive, and the second additive is selected from the group consisting of cyclic carbonates with unsaturated carbon-carbon bonds, cyclic carbonates with fluorine atoms, cyclic sulfonate compounds, compounds with cyano groups, and combinations thereof.

8. The non-aqueous electrolyte solution according to claim 7, **characterized in that,** the feeding mass of the second additive is 0.01 - 5% of the total mass of the non-aqueous electrolyte solution.

9. The non-aqueous electrolyte solution according to claim 7, **characterized in that,** the second additive is selected from the group consisting of vinylene carbonate, succinonitrile, fluoroethylene carbonate, ethylene sulfate, 1,3-propane sultone, 1,4-butyl sultone, ethylene sulfite, 1,3-(1-propenyl)sultone, 2-sulfobenzoic anhydride, methylene methanedisulfonate, vinyl ethylene sulfite, propylene sulfate, propylene sulfite, butylene sulfite, and combinations thereof.

10. The non-aqueous electrolyte solution according to claim 1, **characterized in that,** the electrolyte salt is selected from the group consisting of LiBF₄, LiPF₆, LiAsF₆, LiClO₄, LiN(SO₂F)₂, LiN(SO₂CF₃)₂, LiN(SO₂C₂F₅)₂, LiSO₃CF₃, LiC₂O₄BC₂O₄, LiFC₆F₅BC₂O₄, Li₂PO₂F₂, LiBOB, LiODFB, and combinations thereof.

11. The non-aqueous electrolyte solution according to claim 1, **characterized in that,** the molar concentration of the electrolyte salt is 0.5 - 2 mol/L.

12. The non-aqueous electrolyte solution according to claim 1, **characterized in that,** the organic solvent is selected from the group consisting of ethylene carbonate, propylene carbonate, dimethyl carbonate, diethyl carbonate, ethyl methyl carbonate, butylene carbonate, γ-butyrolactone, γ-valerolactone, δ-valerolactone, ε-caprolactone, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, and combinations thereof.

13. A lithium-ion battery comprising a cathode, an anode, and a non-aqueous electrolyte solution, **characterized in that,** the non-aqueous electrolyte solution is the non-aqueous electrolyte solution according to claim 1.

14. The lithium-ion battery according to claim 13, **characterized in that,** the cathode active material is selected from the group consisting of layered transition metal oxides, olivine-form phosphate compounds and spinel-form manganese-contained compounds,
and/or, the anode active material is graphite.

15. The lithium-ion battery according to claim 13, **characterized in that,** the voltage range of the lithium-ion battery is 4.35 - 4.6 V.
